# EUROPÄISCHE PATENTSCHRIFT

(11) **EP 0 891 510 B1**
(45) Veröffentlichungstag und Bekanntmachung des Hinweises auf die Patenterteilung: **22.09.1999**
(21) Anmeldenummer: 97923036.4
(22) Anmeldetag: 09.05.1997
(51) Int. Cl.: F16L 47/02, B29C 65/34

(54) **VERFAHREN ZUM HERSTELLEN EINER AUS THERMISCH ANSCHWEISSBAREM MATERIAL BESTEHENDEN ROHRARMATUR**
PROCESS FOR PRODUCING A PIPE FITTING CONSISTING OF THERMALLY WELDABLE MATERIAL
PROCEDE DE PRODUCTION D'UN ELEMENT DE ROBINETTERIE POUR TUBES, EN MATERIAU THERMOSOUDABLE

(30) Priorität: 12.06.1996 DE 19623353; 31.10.1996 DE 19644055
(43) Veröffentlichungstag der Anmeldung: 20.01.1999
(73) Patentinhaber: MANIBS Spezialarmaturen GmbH & Co. KG, D-42859 Remscheid (DE)
(72) Erfinder: SCHAFSTEIN, Jürgen, D-42859 Remscheid (DE)
(74) Vertreter: Mentzel, Norbert, Dipl.-Phys.
(86) Internationale Anmeldenummer: EP9702377
(87) Internationale Veröffentlichungsnummer: WO9747913

(56) Entgegenhaltungen:
- EP-A- 0 119 061
- DE-A- 19 503 888
- US-A- 4 455 482
- US-A- 5 229 581

## Beschreibung

Die Erfindung richtet sich auf ein Verfahren der im Oberbegriff des Anspruches 1 angegebenen Art. Rohrarmaturen verwendet man für verschiedene Zwecke, um sie nachträglich an einem bereits verlegten, ggf. unter Mediendruck stehenden Leitungsrohr, das als Medium z. B. Gas oder Wasser führt, anzubringen. Auch zu Reparaturzwecken oder zur Verbindung von Rohren werden entsprechende Rohrarmaturen verwendet. Die Rohrarmatur und das Leitungsrohr bestehen dabei wenigstens bereichsweise aus thermoplastischem Kunststoff. In diesen Fällen besitzen die Rohrarmaturen an ihrer Kontaktfläche zum Leitungsrohr einen Anschweißbereich, in welchem wenigstens ein elektrischer Heizdraht in mehreren Windungen verlegt wird. An den Enden des Heizdrahts werden in der Regel Kontakte angebracht, die beim späteren Anschweißen der Rohrarmatur zum Anschluß einer elektrischen Stormquelle dienen.

Bei dem bekannten Verfahren dieser Art (DE 195 03 888A1; US 4,455,482 A) werden in einem ersten Spritzgusswerkzeug Kanäle in Windungen angeordnet und in diese Kanäle ein erstes Schweißmaterial eingeleitet, das dort, nach seiner Verfestigung, ein plattenförmiges Vorprodukt erzeugt. Zwischen den durch das Schweißmaterial gefüllten Kanäle des Vorprodukts verläuft eine Rinne in Windungen. In diese Rinne wird ein elektrischer Heizleiter eingelegt. Es müssen Vorkehrungen getroffen werden, damit der Heizdraht nicht wieder aus den Rinnen herausgelangt. Das ist mühsam und zeitaufwendig. Das mit dem elektrischen Heizleiter ausgerüstete plattenförmige Vorprodukt wird dann in ein zweites Spritzgusswerkzeug eingeführt, das zur Herstellung der Rohrarmatur dient. Dabei wird das plattenförmige Vorprodukt an derjenigen Formfläche des zweiten Spritzgusswerkzeugs angeordnet, an welche dann die Schweißverbindung mit dem Leitungsrohr entstehen soll. Dann wird ein zweites Schweißmaterial in das zweite Spritzgusswerkzeug eingeleitet, wo dann nach dem Aushärten als Endprodukt die fertige Rohrarmatur entsteht. Ein wesentlicher Nachteil des Endprodukts ist, dass der elektrische Heizdraht nicht unmittelbar an der Kontaktfläche zwischen der Rohrarmatur und dem Leitungsrohr liegen kann. An der Kontaktfläche befindet sich die Bodenwand des plattenförmigen Vorprodukts unterhalb der Rinne, in welcher der Heizdraht angeordnet wurde. Dadurch wird die Wärmeleitung vom Heizdraht zur Kontaktfläche behindert. Der Schweißvorgang ist langwierig und die Schweißverbindung zwischen der Rohrarmatur und dem Leitungsrohr unbefriedigend.

Bei einem anderen Verfahren (EP 0 119 061 A1) werden in zwei verschiedenen Spritzgusswerkzeugen jeweils zwei Vorprodukte hergestellt, nämlich einerseits eine heizdrahtfreie Rohrarmatur mit einem Flansch und andererseits ein plattenförmiges Vorprodukt mit Rillen. Dann wird, über dem vorausgehend beschriebenen bekannten Verfahren, ein Heizdraht in die Rillen eingelegt und diese Kombination an die Innenfläche des Flansches angelegt. Dabei darf der Heizdraht nicht aus den Rillen herausgelangen. Erst danach wird der Heizdraht elektrisch soweit erwärmt, bis eine erste Schweißverbindung zwischen dem plattenförmigen Vorprodukt und der vorgefertigten Rohrarmatur entsteht. Dann erst liegt das Endprodukt vor. Die Rillen im plattenförmigen Vorprodukt sind so angeordnet, daß der Heizdraht in Spiralform oder in Form eines ringförmigen Mäanders verlegt werden kann. Dieses Verfahren ist umständlich. Auch in diesem Fall ergibt sich der Nachteil, dass im Endprodukt der Heizdraht durch die Dicke der Kunststoffplatte vom plattenförmigen Vorprodukt von der am Leitungsrohr festzuschweißenden Kontaktfläche entfernt ist. Dadurch geht auch hier viel Wärmeenergie verloren.

Bei anderen Verfahren wird ein solcher Heizdraht unmittelbar in der zur Herstellung der Rohrarmatur dienenden Spritzgussform in Windungen gelegt und ist beim Spritzgießen in das Schweißmaterial der Rohrarmatur integriert (CH 528 697 C). Der Heizdraht ist dabei von einem Kunststoffmantel umhüllt, der die Wärmeleitung zur Kontaktfläche zwischen der Rohrarmatur und dem Leitungsrohr behindert. Die Windungen des Heizdrahtes können dabei als nonofilare bzw. bifilare Spirale oder als Mäander in die Form eingelegt werden. Die Lage des Heizdrahtes ist beim Spritzgießen nicht gesichert, weshalb es zu fehlerhaften Drahtverläufen kommt. Solch fehlerhaften Rohrarmaturen sind nicht einwandfrei an Leitungsrohren anschweißbar.

Der Erfinder liegt die Aufgabe zugrunde, ein wirtschaftliches Verfahren zum Herstellen von Rohrarmaturen der im Oberbegriff des Anspruches 1 angeführten Maßnahmen erreicht, denen folgende besondere Bedeutung zukommt.

Das erfindungsgemäße Verfahren läuft dreistufig ab. Es wird zunächst der Heizdraht in eine ebene Wellenlinien-Form gebracht. Dieses Zwischenprodukt soll nachfolgend kurz "Heizstrang" bezeichnet werden. Der Verlauf des Heizdrahtes in diesem Heizstrang lässt sich auch als eine Sinus-Linie beschreiben. Dann setzt das zweistufige Spritzgussverfahren zur Herstellung eines Vorprodukts einerseits und des Endprodukts andererseits an, jedoch in einem gegenüber dem bekannten Verfahren gegensätzlichen Weise. Während bei dem bekannten Verfahren in die gewundenen Kanäle des ersten Spritzgusswerkzeuges zunächst das erste Schweißmaterial eingeleitet wird, um nach seiner Verfestigung zwischen den Kanälen Rinnen zum Einlegen des bekannten linearen Heizleiters zu erzeugen, geht man bei der Erfindung in umgekehrter Weise vor.

Bei der Erfindung wird in die leeren Kanäle des ersten Spritzgusswerkzeugs zunächst der wellenlinienförmige Heizstrang eingelegt und erst danach das erste Schweißmaterial in die mit dem Heizstrang versehenen Kanäle eingeleitet. Dadurch wird der Heizstrang mit der einen Breitseite seiner Wellenlinie gegen die eine Formfläche des Spritzgusswerkzeugs gedrückt, die beim Vorprodukt die Außenfläche und beim künftigen Endprodukt die Kontaktfläche für das Leitungsrohr bildet. Das kann durch die in Anspruch 2 und/oder 3 genannten Maßnahmen erreicht werden. Weil der Heizstrang nach dem Spritzgießen des Vorprodukts im ersten Schweißmaterial eingebettet wird, ist der Verlauf seiner Wellenlinie an der Außenfläche des Vorprodukts festgelegt. Beim späteren Spritzgießen der Rohrarmatur im zweiten Spritzgusswerkzeug ist daher die Lage des Heizstrangs gesichert; seine Wellenlinie verläuft exakt in der Kontaktfläche des Endprodukts. Fehler sind vermieden.

Die an der Kontaktfläche der Rohrarmatur erscheinende Wellenlinien-Form sorgt für eine schnelle, intensive Erwärmung bereits bei mäßigem Stromfluss. Das Erweichen und Ineinanderströmen vom Material der Rohrarmatur einerseits und vom Werkstoff des Leitungsrohres andererseits erzeugen, nach dem Verfestigen, eine zuverlässige Schweißverbindung.

Weitere Maßnahmen und Vorteile der Erfindung ergeben sich aus den Unteransprüchen, der nachfolgenden Beschreibung und den Zeichnungen. Dabei richtet sich die Erfindung auf alle daraus entnehmbaren neuen Merkmale und Merkmalskombinationen, auch wenn diese nicht ausdrücklich in den Ansprüchen angeführt sein sollten. In den Zeichnungen ist die Erfindung in einem Ausführungsbeispiel dargestellt. Es zeigen:
- Fig. 1: die Draufsicht auf ein nach der Erfindung erzeugtes Vorprodukt für eine Rohrarmatur,
- Fig. 2: eine schematische Querschnittansicht durch das Vorprodukt von Fig. 1,
- Fig. 3,: in Vergrößerung, die Unteransicht auf ein Teilstück des in Fig. 1 gezeigten Vorprodukts,
- Fig. 4,: in entsprechender Vergrößerung, die Draufsicht auf das in Fig. 3 gezeigte Teilstück des Vorprodukts,
- Fig. 5: einen Querschnitt durch das in Fig. 4 gezeigte Teilstück des Vorprodukts längs der dortigen Schnittlinie V-V,
- Fig. 6: schematisch einige Bauteile eine Vorrichtung, die zur Herstellung einer Wellenlinienform bei einem Heizdraht dient, wodurch ein wellenlinienförmiger Heizstrang entsteht,
- Fig. 7,: in perspektivischer Darstellung und Vergrößerung, ein Teilstück des wellenlinienförmigen Heizstrangs von Fig. 6, der in das Vorprodukt von Fig. 1 bis 5 integriert wird,
- Fig. 8 und 9: schematisch Teilstücke einer Spritzgußform zur Herstellung des in Fig. 1 bis 5 gezeigten Vorprodukts, und zwar in zwei unterschiedlichen Arbeitsstufen,
- Fig. 10: schematisch einen Querschnitt durch eine weitere Spritzgußvorrichtung, die das Vorprodukt von Fig. 1 bis 5 aufnimmt und zur Herstellung einer Rohrarmatur dient,
- Fig. 11,: in Vergrößerung, ein Teilstück der in Fig. 10 gezeigten Vorrichtung,
- Fig. 12,: im Schnitt, ein Teilstück der in der Vorrichtung von Fig. 10 herstellbaren Rohrarmatur, wo auch die Gebrauchslage dieses Endprodukts an einem Leitungsrohr angedeutet ist,
- Fig. 13: die Seitenansicht auf ein anderes Ausführungsbeispiel eines zu Fig. 1 analogen Vorprodukts,
- Fig. 14: eine Querschnittansicht durch das in Fig. 13 gezeigte Vorprodukt längs der Schnittlinie III-III und
- Fig. 15,: in Seitenansicht, das mit dem Vorprodukt von Fig. 13 und 14 hergestellte Endprodukt, wo der Gebrauchsfall zum Verbinden von zwei Rohren mit angedeutet ist.

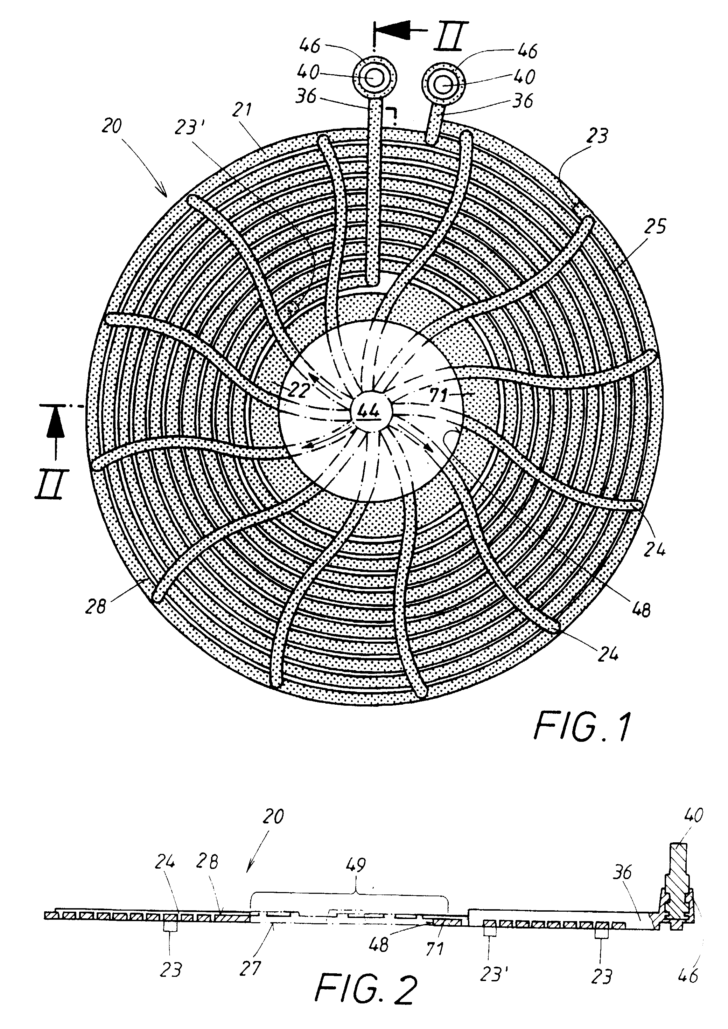

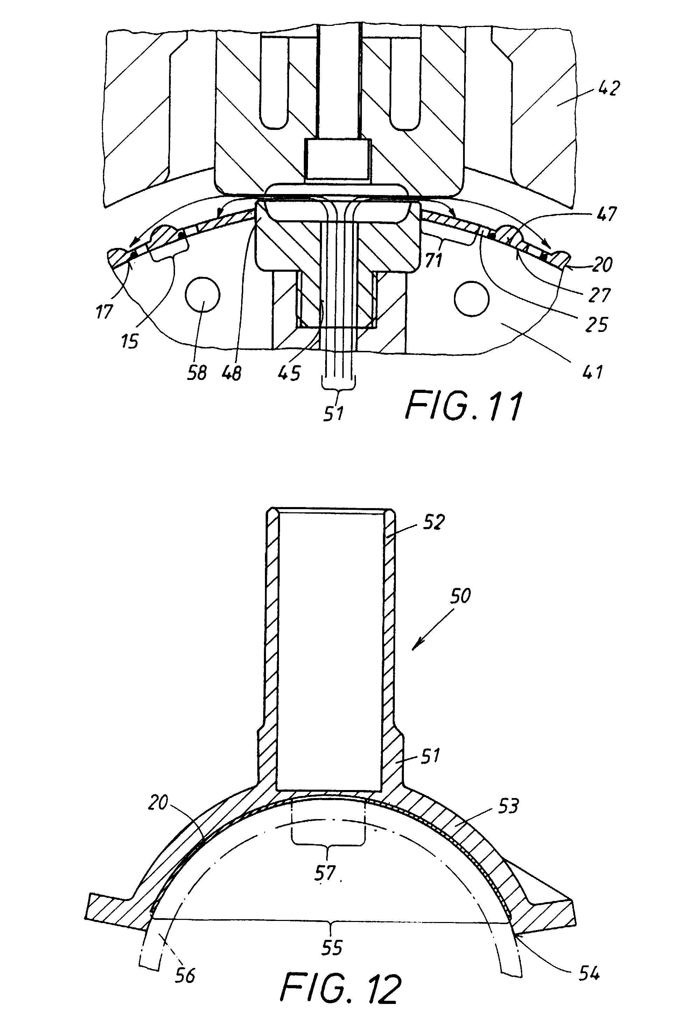

Ziel der Erfindung ist es, eine beispielsweise in Fig. 12 gezeigte Rohrarmatur 50 herzustellen, die aus wenigstens bereichsweise anschweißbarem Material 51, nämlich thermoplastischem Kunststoff, besteht und an einer gewünschten Stelle eines ebenfalls aus thermisch schweißbarem Werkstoff bestehenden Leitungsrohr 56 angeschweißt werden soll. Dieses Material soll nachfolgend kurz "Schweißmaterial" bezeichnet werden. Dazu besitzt die Rohrarmatur 50 einen Sattel 53, der im Montagefall an der mit 54 bezeichneten Kontaktfläche mit dem Leitungsrohr 56 in Berührung kommt. Zum Anschweißen ist in einem bestimmten Anschweißbereich 55 ein noch näher zu beschreibender Heizdraht 10 integriert. Dieser Heizdraht 10 wird zunächst in einer besonderen, noch näher anzugebenden Weise verformt und ist Bestandteil eines besonderen Vorprodukts 20, das in den Fig. 1 bis 5 gezeigt ist. Dieses Vorprodukt 20 wird beim Spritzgießen der Rohrarmatur 50 in den gewünschten Anschweißbereich 55 integriert, wie aus Fig. 12 zu entnehmen ist. Eine solche Rohrarmatur kann einen oder mehrere Rohrstutzen 52 aufweisen. Nach der Schweißbefestigung der Rohrarmatur kann das Leitungsrohr 56 durch einen Rohrstutzen 52 hindurch an der mit 57 gekennzeichneten Stelle angebohrt werden.

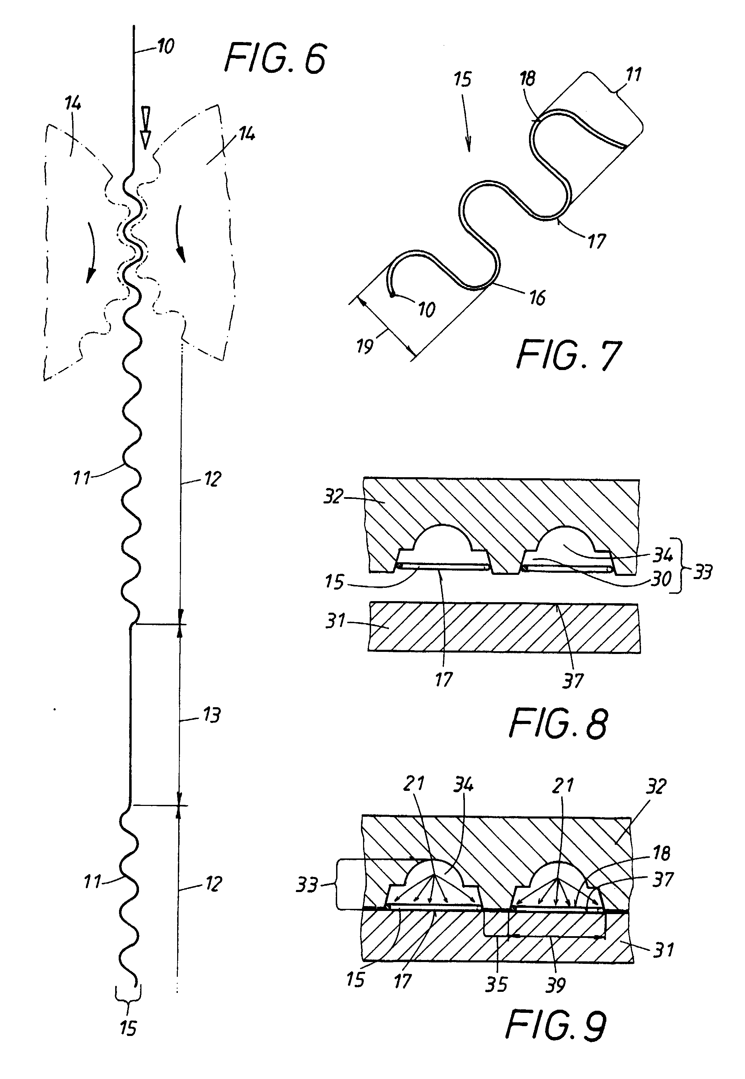

Wie in Fig. 6 gezeigt ist, geht man von einem blanken Heizdraht 10 aus, der keinen Isolationsmantel aufweist, aber abschnittweise 12 in eine ebene Wellenlinienform 11 gebracht wird. Der Heizdraht 10 besitzt allenfalls einen üblichen, minimalen Lacküberzug. Zwischen den Wellenabschnitten 12 können sich lineare Drahtabschnitte 13 befinden. Dieses wellenlinienförmige Zwischenprodukt 15 ist in Fig. 7 perspektivisch dargestellt und soll nachfolgend kurz "Heizstrang" bezeichnet werden. Die Wellenlinienform 11 des Heizstrangs 15 kommt dadurch zustande, daß der ursprünglich geradlinige Draht, wie aus Fig. 6 zu erkennen ist, durch zwei miteinander kämmende Zahnräder 14 hindurchgeführt wird. Die Zahnräder 14 haben ein Zahnprofil in Form einer solchen Wellenlinie 11. Die Wellenlinie hat hier Sinusform. Die zwischen den Wellenlinienabschnitten 12 liegenden linearen Drahtabschnitte 13 entstehen dadurch, daß während des Durchlaufs der Strecke 13 im Sinne des Pfeils von Fig. 6 die beiden Zahnräder 14 voneinander wegbewegt werden. Dann können die Zähne der Zahnräder 14 den Heizdraht 10 nicht mehr verformen.

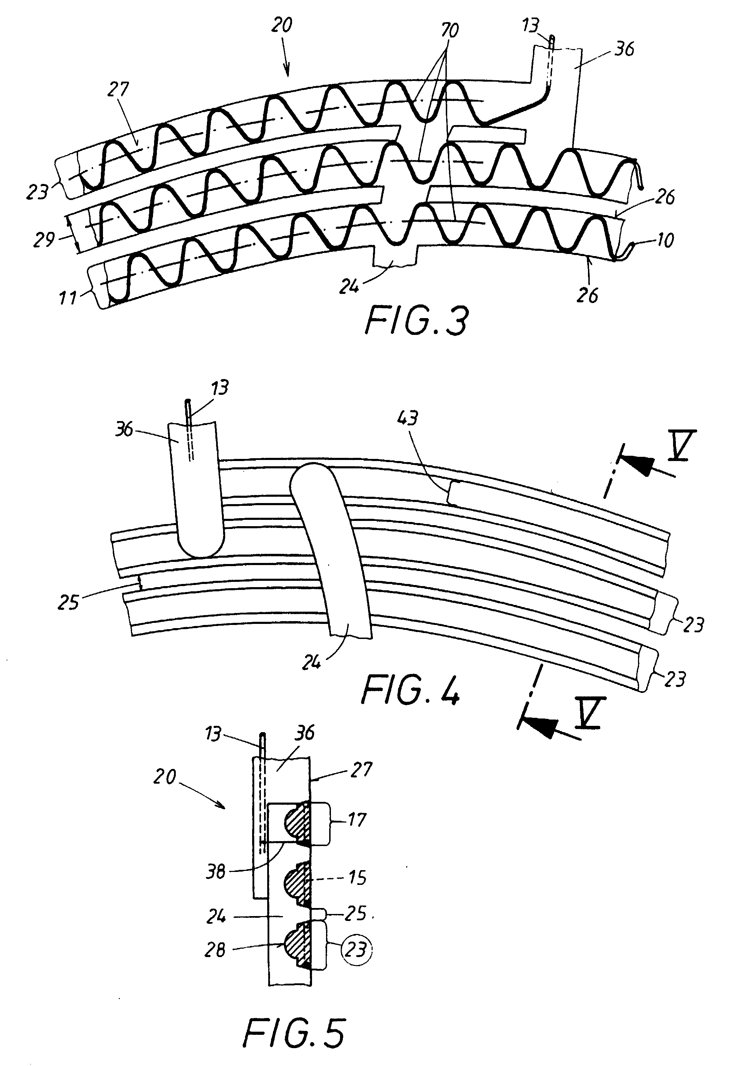

Zur Herstellung des Vorprodukts 20 dient ein Spritzgußwerkzeug mit zwei Formteilen 31, 32, wovon die Fig. 8 und 9 vergrößerte Querschnitte zeigen. Während der eine Formteil 31 als eine im wesentlichen ebene Platte ausgebildet ist, besitzt der andere Formteil 32 einen Kanal 33, der hier als ebene, monofilare Spirale gestaltet ist. Dieser Kanal 33 läßt sich in zwei funktionsunterschiedliche Teilquerschnitte 30, 34 gliedern. Der eine Teilquerschnitt 30 hat die Form eines Trapezes, welches gegen den anderen Formteil 31 hin mit seiner großen Trapezseite geöffnet ist. Dieser Teilquerschnitt 30 dient zur Aufnahme des wellenlinienförmigen Heizstrangs 15. Die Kanalwände dieses Teilquerschnitts 30 sind hinterschnitten und greifen an den aus Fig. 7 erkennbaren, jeweils gegenüberliegenden Scheitelbereichen 16 des Heizstrangs 15 an. Der eingelegte Heizstrang 15 hat eine gewisse Querelastizität und wird in dem Teilquerschnitt 30 auch dann festgehalten, wenn die beiden Formteile 31, 32 geöffnet sind. Entsprechend dem gewundenen Kanal 33 verläuft der Heizstrang 15 seinerseits in Spiralwindungen 70 gemäß Fig. 3.

Zum Kanal 33 gehört aber noch ein Fließquerschnitt 34 in Form einer halbkreisartigen Wölbung, die auf dem trapezförmigen vorerwähnten Teilquerschnitt 30 liegt. Dieser Teilquerschnitt dient bei geschlossener Spritzgußform gemäß Fig. 9 zur guten Leitung der durch Pfeile verdeutlichten Strömung des Schweißmaterials 21. Das Schweißmaterial 21 strömt beim Herstellen des Vorprodukts 20 gegen die nach oben weisende Breitseite 18 des Heizstrangs 15, wodurch der Heizstrang 15 gegen die Formfläche 37 des benachbarten Formteils 31 gedrückt wird. Nach dem Verfestigen des Schweißmaterials 21 in der Spritzgußform 31, 32 entsteht daher das aus Fig. 1 bis 5 erkennbare Vorprodukt 20. Fig. 3 zeigt die Unteransicht, wo die Wellenlinie 11 an der Außenseite 27 sichtbar bleibt. Die Wellenlinienform sorgt zugleich für eine ausreichende Verankerung des Heizstrangs 15 im Schweißmaterial des Vorprodukts 20, das folgenden weiteren besonderen Aufbau hat.

Nach Verfestigen des Kunststoffmaterials entsteht in den einzelnen Spiralwindungen des Kanals 33 ein entsprechend gewundenes Band 23. Die aus Fig. 7 erkennbare Wellenlinienbreite 19 ist im wesentlich gleich der zur Bandherstellung dienenden, aus Fig. 9 erkennbaren Kanalbreite 39. Daher verläuft die Wellenlinie 11 in den einzelnen Windungen 70 des Bandes 23, gemäß Fig. 3, über die ganze Bandbreite 29, zwischen den beiden Bandkanten. Dies ist auch aus dem Querschnitt von Fig. 5 gut zu erkennen.

Ausweislich der Fig. 9 sind die einzelnen Windungen des Kanals 33 in einem radialen Abstand 35 zueinander angeordnet, weshalb beim Vorprodukt 20, zwischen den einzelnen Bandwindungen 23, freie Lücken 25 entstehen. Diese Lücken 25 werden beim Vorprodukt 20 von Verbindungsrippen 24 überbrückt, wie Fig. 1 zeigt. Diese Verbindungsrippen 24 entstehen durch in der Spritzgußform 31, 32 vorgesehenen, nicht näher gezeigten Verteilungsleitungen, die von einer zentralen in Fig. 1 erkennbaren Angußstelle 44 ausgehen und sich im wesentlichen radial über das hier kreisscheibenförmige Vorprodukt 20 erstrecken. Diese Verteilungsleitungen führen das Schweißmaterial 21 von der Angußstelle 44 bis zu den einzelnen Kanalwindungen 33 und sorgen dafür, daß die Massen vornehmlich in die beschriebenen Fließquerschnitte 34 strömen, die ein gerundetes Profil aufweisen, das gegenüber dem Kantenprofil der Aufnahmequerschnitte 30 abgesetzt ist. In dem fertigen Band 23 entstehen dann im Bereich dieser Fließquerschnitte 34 aus Fig. 4 erkennbare gewölbte Längswülste 43. Der Leitungsquerschnitt zur Herstellung der Verbindungsrippe 24 ist, wie aus dem fertigen Vorprodukt 20 von Fig 5 zu erkennen ist, höher als der zur Bandherstellung 23 dienende Kanal 33, weshalb die Verbindungsrippen 24 auf der in Fig. 1 sichtbaren Innenfläche 28 des Vorprodukts 20 emporragen und unterbrechungsfrei durchlaufen. Die eine kontinuierliche Stegbreite aufweisenden Verbindungsrippen 24 sind aber bogenförmig gekrümmt, was günstig für den Strömungsfluß ist.

Das Vorprodukt 20 besitzt schließlich auch noch radiale Querstege 36, die den Kreisumriß des Vorprodukts 20 überragen. Diese entstehen durch entsprechend ausgeformte, nicht näher gezeigte Querkammern in der Spritzgußform 31, 32, die in ebenfalls nicht gezeigten Kammererweiterungen enden. In diese Querkammern werden bis zu den Kammererweiterungen beim Einlegen des Heizstrangs 15 die erwähnten glatten Drahtabschnitte 13 eingelegt, wie aus Fig. 3 bis 5 zu entnehmen ist. In die Kammererweiterungen werden zugleich die jeweiligen Kontakte 40 eingelegt, so daß nach dem Spritzgießen und Verfestigen des Schweißmaterials 21 am Ende der Querstege 36 die aus Fig. 1 und 2 erkennbaren Näpfe 46 zur Halterung der Kontakte 40 entstehen. Die glatten Drahtabschnitte 13 verlaufen, wie aus Fig. 5 zu entnehmen ist, in einem ausreichenden Höhenabstand 38 zum wellenlinienförmigen Heizstrang 15, was vor allem für den glatten Abschnitt 13 des langen Querstegs 36 gilt, der von dem Wellenlinien-Abschnitt des Heizdrahts der in Fig. 1 gezeigten innersten Bandwindung 23' ausgeht. Der glatte Drahtabschnitt 13 kann dabei, wie in den Fig. gezeigt, entweder im Inneren des Querstegs 36 oder auf der Oberseite dieses Stegs 36 verlaufen.

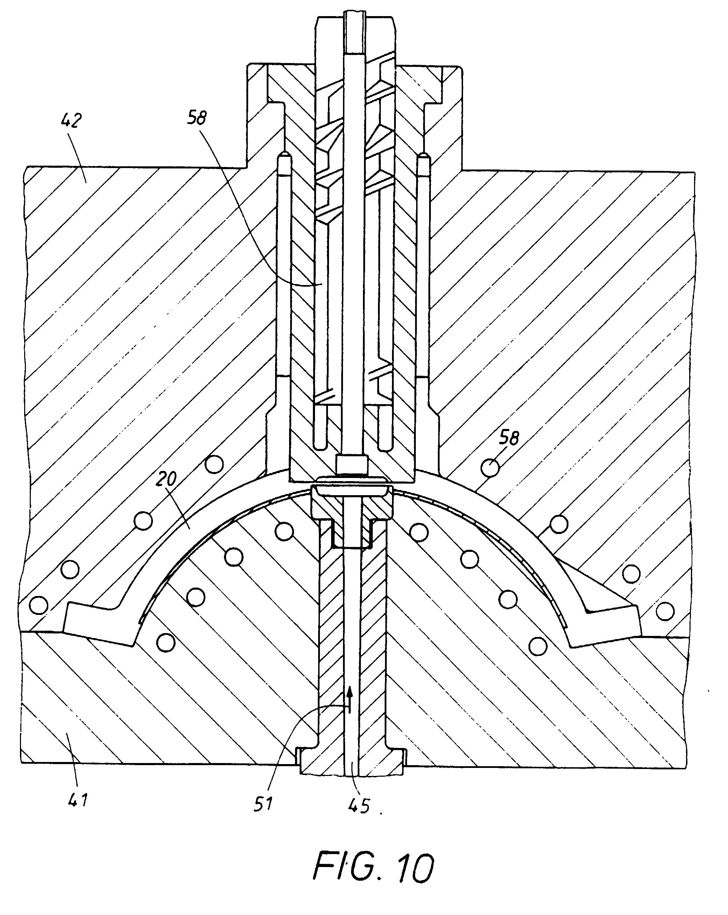

Beim fertigen Vorprodukt, gemäß Fig. 1 bis 5, ist die Lage der ebenen Wellenlinie 11 vom Heizstrang 15 sowie die Position der Kontakte 40 durch das Schweißmaterial 21 festgelegt. Dieses Vorprodukt dient somit als Träger für den in Windungen gelegten besonderen Heizstrang 15 und kann daher nachfolgend als "Heizstrangträger" bezeichnet werden. In der durch Pfeile in Fig. 1 verdeutlichten Strömungsrichtung, von der Angußstelle 44 aus gesehen, ist vor der innersten Bandwindung 23' eine flache, hier ringförmige Randzone 18 vorgesehen, die durch eine entsprechende, nicht näher gezeigte Anfangskammer im Spritzgußwerkzeug 31, 32 entsteht. Diese Anfangskammer wird über die bereits erwähnten Verteilungsleitungen, die zur Bildung der Verbindungsrippen 24 im Heizstrangträger 20 dienen, mit Schweißmaterial 21 versorgt. Dieser Kammerquerschnitt ist flacher als der Gesamtquerschnitt 34, 30 der zur Bandherstellung 23 dienenden Kanäle 33 ausgebildet. Dies ist für die weitere Verarbeitung des erfindungsgemäßen Heizstrangträgers 20 in der zu erstellenden Rohrarmatur 50 bedeutsam, wie anhand der Fig. 10 und 11 zu ersehen ist. Der in Fig. 1 und 2 zentrale Teil 49 wird herausgeschnitten, so daß dort gleich die flache Randzone 18 mit ihrer Kreisöffnung 22 beginnt. Im vorliegenden Fall ist der Heizstrangträger 20 ein ebenes flaches Produkt. Wegen der verbleibenden freien Lücken 25 zwischen den Bandwindungen 23 und Verbindungsrippen 24 hat der Heizstrangträger 20 den Charakter einer Matte; er ist flexibel und kann aus seiner ursprünglichen in Fig. 1 und 2 gezeigten ebenen Position ohne weiteres zylindrisch verformt werden. Das ist für die folgende weitere Verarbeitung des Heizstrangträgers 20 bedeutsam.

Zur Herstellung der Rohrarmatur 50 dient das in Fig. 10 und 11 gezeigte zweite Spritzgußwerkzeug 41, 42. Es besteht aus einem düsenseitigen Formteil 41 mit einer Düse 45 zum Einführen des bereits erwähnten Schweißmaterials 51 und einem zum Auswerfen der fertigen Rohrarmatur 50 dienenden auswerferseitigen Formteil 42. Der vorproduzierte Heizstrangträger 20 von Fig. 1 bis 5 wird bei geöffnetem Spritzgußwerkzeug zunächst in den auswerferseitigen Formteil 42 eingesteckt. Dort sind geeignete Aufnahmen für die herausragenden, bereits erwähnten Kontakte 40 vorgesehen. Kommt das Spritzgußwerkzeug 41, 42 in die aus Fig. 10 und 11 ersichtliche Schließlage, so wird der Heizstrangträger 20 mit seiner zentralen Kreisöffnung 22 selbsttätig auf eine Düsenbuchse 48 des gegenüberliegenden Formteils 41 aufgesteckt. Diese Düsenbuchse 48 umschließt die zur Strömungseinleitung dienende zentrale Düse 45 und erhebt sich über die maßgebliche sattelförmige Formfläche 47 dieses Formteils 41. Strömt, wie Fig. 11 zeigt, das Schweißmaterial 51 in Richtung der eingezeichneten Pfeile in den Hohlraum zwischen den beiden Formteilen 41, 42 ein, so trifft es zunächst auf die von der Formfläche 47 weggerichtete Seite der flachen Randzone 71 des Heizstrangträgers 20 und drückt diesen mit seiner Außenfläche 27 gegen die sattelförmige Formfläche 47 des Formteils 41 an. An dieser Sattelfläche 47 wird also die ursprünglich ebene Matte des Heizstrangträgers 20 teilzylindrisch verformt. Das einströmende Schweißmaterial 51 kann daher nicht zwischen der Düsenbuchse 48 und der Kreisöffnung 22 der flachen Randzone 71 auf die Außenfläche 27 vom Heizstrangträger 20 gelangen.

Zur schnellen Verfestigung des eingespritzten Schweißmaterials 51 besitzen die beiden Formteile 41, 42 geeignete Kühlmittelkanäle 58. Bei geöffneter Form kann dann im vorliegenden Fall das in Fig. 12 ersichtliche, bereits beschriebene Endprodukt 50, mittels geeigneter, nicht näher gezeigter Auswerfer, aus dem Formteil 42 entnommen werden. Durch die vorerwähnte Formfläche 47 des düsenseitigen Formteils 41 entsteht am Endprodukt 50 die bereits erwähnte Kontaktfläche 54. Dort bleibt der integrierte Heizstrangträger 20 mit seiner beschriebenen Außenfläche 27 frei von Schweißmaterial 51, weil dieses nur in die verbleibenden Lücken 25 gelangt und diese schließen. Es bleibt also dort der wellenlinienförmige Heizstrang 15 mit der ganzen äußeren Breitseite 17 seiner Wellenlinienform sichtbar. In einem anderen Spritzgußwerkzeug könnte der Heizstrangträger 20 auch vollzylindrisch verformt werden.

Es ist also sichergestellt, daß die äußere Breitseite 17 der Wellenlinie 11 sowohl an der Außenfläche 27 des Vorprodukts 20 als auch an der Kontaktfläche 54 des Endprodukts 50 sichtbar bleibt. In der Praxis ragen sogar die Wellenlinien 11 etwas über die Außenfläche 27 hinaus, was durch das Schrumpfen des Schweißmaterials 51 erklärt werden kann. Die freiliegende Wellenlinie 11 ist für die Effizienz der späteren Schweißbefestigung der Rohrarmatur 50 an der Rohrleitung 56 sehr günstig. Elektrische Isolationsprobleme können sich dabei nicht ergeben, weil ja auch die Mantelfläche des zu verschweißenden Leitungsrohres 56 aus elektrisch nichzt leitendem thermoplastischem Kunststoff besteht.

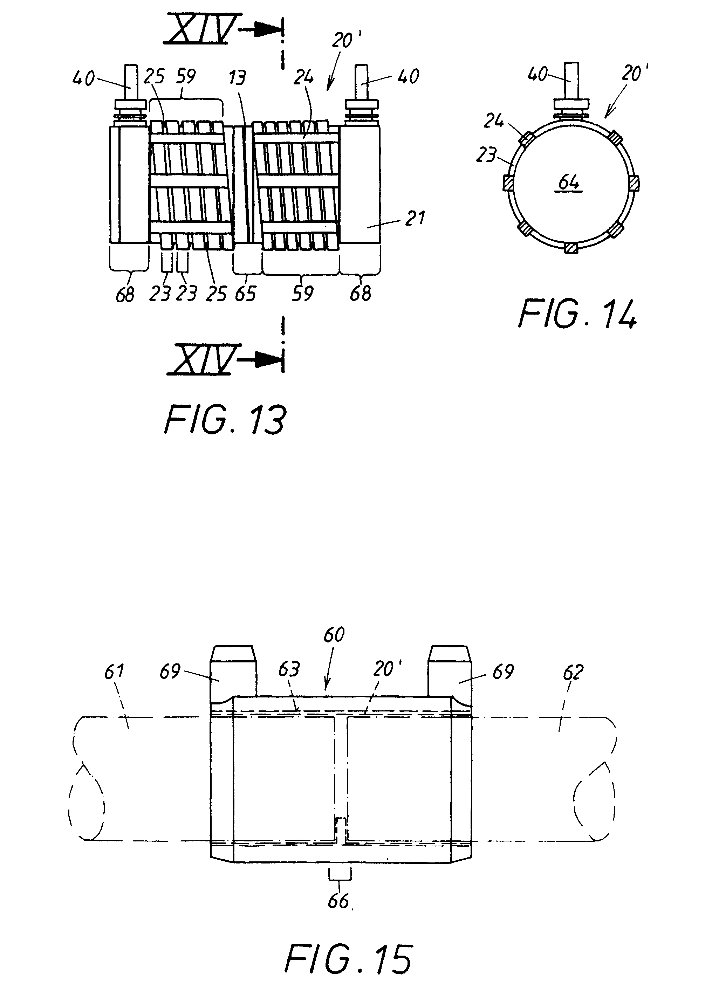

Fig. 13, 14 zeigen ein anderes Ausführungsbeispiel eines erfindungsgemäßen Heizstrangträgers 20', wo zur Benennung analoger Elemente die gleichen Bezugszeichen wie beim mattenförmigen Heizstrangträger 20 des vorausgehenden Ausführungsbeispiels verwendet werden, weshalb insoweit die bisherige Beschreibung gilt. Es genügt, lediglich auf die Unterschiede einzugehen.

Ein Unterschied besteht zunächst darin, daß die hier vorgesehenen Bandwindungen 23 von vorneherein in Form einer Helix verlaufen und daher bereits im Vorprodukt 20' die besonders aus Fig. 14 erkennbare vollzylindrische Form einnehmen. In diesen Bandwindungen 23 verläuft natürlich, was in Fig. 13 und 14 nicht erkennbar ist, der wellenlinienförmige Heizstrang in der bereits beschriebenen Weise. Die einzelnen Bandwindungen 23 sind auch hier durch Verbindungsrippen 24 verbunden, die allerdings achsparallel zum Zylinder verlaufen können. Dieser Aufbau liegt in zwei Axialabschnitten 59 des Vorprodukts 20' vor, das die Form eines zylindrischen Korbes hat.

Der so erlangte zylindrische Korb 20' dient zur Herstellung des in Fig. 15 in Seitenansicht dargestellten Endprodukts 60. Das Endprodukt 60 ist in diesem Fall eine Verbindungshülse 60, die für einen stirnseitigen Zusammenhalt von zwei Rohren 61, 62 dient. Bei der Spritzgußherstellung dieser Verbindungshülse 60 kommt der zylindrische Korb 20' an der in Fig. 15 verdeutlichten Hülseninnenfläche 63 zu liegen, wo in der bereits im vorausgehenden Fall genannten Weise die eine Breitseite der Wellenlinie zum Hülseninneren 64 hin blank liegt. Der im vorliegenden Fall verwendete Heizstrang 15 besitzt drei der im Zusammenhang mit Fig. 6 erläuterten glatten Drahtabschnitte 13, von denen zwei, wie im vorausgehenden Fall, zum Anschluß der hier an den Enden des zylindrischen Korbs 20' vorgesehenen Kontakte 40 dienen und in Fig. 13 nicht erkennbar sind. Der dritte Drahtabschnitt 13 liegt zwischen den erwähnten Axialabschnitten 59 und ist in Fig. 13 dargestellt. Dort befindet sich, erzeugt aus dem Schweißmaterial 21 dieses zylindrischen Korbs 20', ein Mittelring 65, der beim Endprodukt 60 von Fig. 15 in der Hülsenmitte 66 zwischen den beiden Stirnenden der zu verbindenden Rohre 61, 62 zu liegen kommt.

Im Gebrauchsfall von Fig. 15 befindet sich zwischen den beiden Stirnenden der Rohre 61, 62 ein Innenanschlag 67, der die Position der Rohre 61, 62 im Hülseninneren festlegt. Dieser Anschlag 67 könnte vom Schweißmaterial 21 des zylindrischen Korbes 20' erzeugt sein. Es ist aber auch möglich, den Anschlag 67 erst später aus dem Schweißmaterial der Verbindungshülse 60 zu bilden, wenn man im Mittelring 65 eine entsprechende Öffnung beläßt und das Spritzgußwerkzeug für die Verbindungshülse 60 entsprechend ausbildet. Diese Öffnung im Mittelring 65 füllt das Schweißmaterial der Verbindungshülse 60 aus und erzeugt dabei im Hülseninneren den Innenanschlag 67. Die freien Lücken 25 zwischen den in Schraubenlinien verlaufenden Bändern 23 werden aber bündig vom Schweißmaterial der Verbindungshülse 60 ausgefüllt, so daß auch hier die Wellenlinien in den Bändern 23 im Hülseninneren 64 frei liegen. Die Kontakte 40 des zylindrischen Korbs 20' von Fig. 13 kommen in Kunststoffansätzen 69 der fertigen Verbindungshülse 60 von Fig. 15 zu liegen.

Es könnte auch ein mattenförmiges Vorprodukt unter Verwendung der wellenlinienförmigen Heizstränge 15 erstellt werden, das später einmal eine Kontaktfläche eines mehrschaligen sogenannten "Überschiebers" bildet, die ein Leitungsrohr mit seinen Schalen vollzylindrisch umschließt. Die hier verwendeten Vorprodukt-Matten werden bei der Herstellung eines derartigen Endprodukts wenigstens in einigen Bereichen mehr als halbzylindrisch im Spritzgußwerkzeug verformt. Der besondere Bandverlauf der Windungen einer solchen Matte ist in der Patentanmeldung 196 23 353.4 dargestellt.

### Bezugszeichzenliste:

- 10: Heizdraht
- 11: Wellenlinie
- 12: wellenlinienförmiger Abschnitt von 15
- 13: linearer Drahtabschnitt von 15
- 14: Zahnräder für 15
- 15: Heizstrang
- 16: Scheitelbereich von 11
- 17: äußere Breitseite von 11
- 18: innere Breitseite von 11
- 19: Wellenlinienbreite von 11
- 20: Vorprodukt, mattenförmiger Heizstrangträger
- 20': Vorprodukt, zylindrischer Korb
- 21: Schweißmaterial von 20
- 22: Kreisöffnung in 20 bei 18
- 23: Band, Bandwindung
- 23': innerste Bandwindung von 20
- 24: Verbindungsrippe zwischen 23, 23'
- 25: freie Lücke zwischen 23
- 26: Bandlängskante von 23
- 27: Außenfläche von 20 bzw. 25
- 28: Innenfläche von 20
- 29: Bandbreite
- 30: Teilquerschnitt von 33, Aufnahmequerschnitt für 15
- 31: Spritzgußwerkzeug für 20, erster Formteil
- 32: Spritzgußwerkzeug für 20, zweiter Formteil
- 33: Kanal in 32, Kanalwindung
- 34: Teilquerschnitt von 33, Fließquerschnitt
- 35: Abstand zwischen 33
- 36: Quersteg von 20
- 37: Formfläche in 31
- 38: Höhenabstand zwischen 13, 15
- 39: Kanalbreite von 33
- 40: Kontakt
- 41: Spritzgußwerkzeug für 50, düsenseitiger Formteil
- 42: Spritzgußwerkzeug für 50, auswerferseitiger Formteil
- 43: Längswulst an 23
- 44: Angußstelle für 24 an 20
- 45: Düse an 41
- 46: Napf für 40 (Fig. 1, 2)
- 47: sattelförmige Formfläche von 41
- 48: Düsenbuchse bei 45
- 49: zentraler Teil von 20
- 50: Rohrarmatur, Endprodukt
- 51: Schweißmaterial für 50
- 52: Rohrstutzen an 50
- 53: Sattel von 50
- 54: Kontaktfläche an 53
- 55: Anschweißbereich von 50 an 53
- 56: Leitungsrohr für 50
- 57: Anbohrstelle für 50 an 56
- 58: Kühlmittelkanal in 41, 42
- 59: durchbrochener Axialabschnitt von 20'
- 60: Verbindungshülse, Rohrarmatur, Endprodukt
- 61: erstes Rohr
- 62: zweites Rohr
- 63: Hülseninnenfläche
- 64: Hülseninneres von 20'
- 65: Ring von 20' für 13
- 66: Hülsenmittel von 60
- 67: Innenaschlag in 64
- 68: Endring von 20'
- 69: Ansatz für 40 (Fig. 15)
- 70: Windung von 15 (Fig. 3)
- 71: flache Randzone von 20

## Patentansprüche

1. Verfahren zum Herstellen einer wenigstens bereichsweise aus thermisch anschweißbarem Schweißmaterial (51) bestehenden Roharmatur (50) in einem Spritzgußwerkzeug (31; 32; 41; 42), die zum Anbringen an bzw. zum Verbinden oder Reparieren von ebenfalls aus thermisch schweißfähigem Werkstoff bestehenden Leitungsrohren (56) dient,
wobei in einem ersten Spritzgußwerkzeug (31, 32) in Windungen (70) verlaufenden Kanäle (33) angeordnet sind, in die Kanäle (33) ein erstes Schweißmaterial (21) eingeleitet wird und im ersten Spritzgußwerkzeug (31, 32) ein Vorprodukt (20) erzeugt wird
und im Vorprodukt (20) ein elektrischer Heizdraht (10) in mehreren Windungen (70) verlegt ist,
und dann, in einem zweiten Spritzgußwerkzeug (41, 42), das zur Herstellung der Rohrarmaturen (50) dient, das Vorprodukt (20) an derjenigen Formfläche (37, 47) angeordnet wird, die bei der fertigen Rohrarmatur (50) die Kontaktfläche (64) für das Leitungsrohr (56) bildet,
und schließlich in das zweite Spritzgußwerkzeug (41, 42) ein zweites Schweißmaterial (51) eingebracht wird und dort, als Endprodukt, die Rohrarmatur (50) entsteht,
**dadurch gekennzeichnet,**
daß zunächst der Heizdraht (10), mindestens abschnittweise (12), in eine ebene Wellenlinien-Form (11) gebracht wird und dadurch einen wellenlinienförmigen Heizstrang (15) erzeugt,
daß dann der wellenlinienförmige Heizstrang (15) in das erste Spritzgußwerkzeug (31, 32) zwischen die Kanalwände des zunächst noch leeren Kanals (33) gelegt wird
und erst danach das erste Schweißmaterial (21) in die Kanäle (33) eingeleitet wird und der Heizstrang (15) mit der einen Breitseite (17) seiner Wellenlinie (11) gegen diejenige Formfläche (37; 47) des ersten Spritzgußwerkzeuges (31, 32) gedrückt wird, die beim Vorprodukt (20) die Außenfläche und später beim Endprodukt (50) die Kontaktfläche (54) für das Leitungsrohr (56) bildet,
und daß nach dem Verfestigen des ersten Schweißmaterials (21) der Heizstrang (15) im Vorprodukt (20) eingebettet ist und mit der äußeren Breitseite (17) seiner Wellenlinie (11) sowohl an der Außenfläche (27) des Vorprodukts (20) als auch später, nach der Verfestigung des zweiten Schweißmaterials (51) in dem zweiten Spritzgußwerkzeug (41, 42), an der Kontaktfläche (56) des Endprodukts (50) möglichst sichtbar bleibt.

2. Verfahren nach Anspruch 1, dadurch gekennzeichnet, daß die Kanalwände vom Kanal (33) des ersten Spritzgußwerkzeugs (31, 32) hinterschnitten sind und daß der eingelegte Heizstrang (15) eine gewisse Querelastizität aufweist und mit gegenüberliegenden Scheitelbereichen (16) seiner Wellenlinie (11) an den hinterschnittenen Kanalwänden angreift.

3. Verfahren nach Anspruch 1 oder 2, dadurch gekennzeichnet, daß beim Spritzgießen des Vorprodukts (20) das Schweißmaterial (21) im wesentlichen gegen die innere Breitseite (18) der Wellenlinie (11) des wellenförmigen Heizstrangs (15) geleitet wird
und daß dabei der Heizstrang (15) von der Strömung des Schweißmaterials (21) mit der äußeren Breitseite (17) seiner Wellenlinie (11) gegen eine Formfläche (37) des ersten Spritzgußwerkzeugs (31, 32) gedrückt wird.

4. Verfahren nach einem oder mehreren Ansprüchen 1 bis 3, dadurch gekennzeichnet, daß zwischen benachbarten Kanalwindungen (33) vom ersten Spritzgußwerkzeug (31, 32) ein Abstand (35) besteht,
und daß nach dem Einleiten und Verfestigen des Schweißmaterials (21) in dem Kanal (33) ein gewundes Band (23) aus Schweißmaterial (21) erzeugt wird, wobei zwischen benachbarten Bandwindungen (23) des Vorprodukts (20) eine frei Lücke (25) verbleibt.

5. Verfahren nach Anspruch 4, dadurch gekennzeichnet, daß der Heizdraht (10) im Heizstrang (15) zu einer Wellenlinie (11) verformt wird, deren Wellenlinienbreite (19) im wesentlichen gleich der zur Bandherstellung (23) dienenden Kanalbreite (39) im Spritzgußwerkzeug (31, 32) ist,
und daß beim Spritzgießen (21) der Heizstrang (15) mit seiner äußeren Breitseite (17) seiner Wellenlinie (11) auf die äußere Bandseite (27) gedrückt wird und dabei über die ganze Bandbreite (19), von der einen Bandkante bis zur gegenüberliegenden, verläuft.

6. Verfahren nach Anspruch 4 oder 5, dadurch gekennzeichnet, daß der zur Bandherstellung (23) dienende Kanal ( 33) - im Querschnitt
gesehen - in zwei Teilquerschnitte (30, 34) gegliedert wird,
nämlich einerseits in einen hinterschnittenen Aufnahmequerschnitt (30) für den wellenlinienförmigen Heizstrang (15), der an der Außenfläche (27) des Vorprodukts (20) liegt und jeweils an gegenüberliegenden Scheitelbereichen (16) der Wellenlinienform vom Heizstrang angreift,
und andererseits in einen Fließquerschnitt (34) zur Leitung der Strömung des Schweißmaterials (21), der an der Innenfläche (28) des Vorprodukts (20) angeordnet ist und keinen Heizdraht (10) beinhaltet.

7. Verfahren nach einem oder mehreren der Ansprüche 2 bis 4, dadurch gekennzeichnet, daß die radialen Abstände (35) zwischen den zur Bandherstellung dienenden Kanalwindungen (33) durch eine oder mehrere Verteilungsleitungen überbrückt werden,
daß wenigstens ein Teil des Schweißmaterials (21) zunächst in die Verteilungsleitungen und von dort dann in die einzelnen Kanalwindungen (33) strömt,
und daß nach dem Verfestigen des Schweißmaterials (21) in den Verteilerleitungen zwischen benachbarten Bandwindungen (23) Verbindungen (24) aus Schweißmaterial erzeugt werden.

8. Verfahren nach Anspruch 6 und 7, dadurch gekennzeichnet, daß die Verteilungsleitungen einen Leitungsquerschnitt aufweisen, der den Fließquerschnitt (34) des zur Bandherstellung dienenden Kanals (33) übersteigt,
und daß nach dem Einführen und Verfestigen des Schweißmaterials (21) in den Verteilungskanälen auf der Innenfläche (28) des Vorprodukts (20) durchgehende Verbindungsrippen (24) über den Bandwindungen (23) erzeugt werden.

9. Verfahren nach Anspruch 8, dadurch gekennzeichnet, daß die Verteilungsleitungen bzw. die in ihnen erzeugten Verbindungsrippen (24) bogenförmig verlaufen.

10. Verfahren nach einem oder mehreren der Ansprüche 4 bis 9, dadurch gekennzeichnet, daß das Schweißmaterial (21) durch eine Angußstelle (44) in das zur Herstellung des Vorprodukts dienende Spritzgußwerkzeug (31, 32) eingeführt wird, und daß von der Angußstelle (44) die Verteilungsleitungen für die Verbindungsrippen (24) ausgehen.

11. Verfahren nach einem oder mehreren der Ansprüche 4 bis 10, dadurch gekennzeichnet, daß bei der Herstellung des Heizstrangs (15) zwischen den in Wellenlinienform (11) verformten wellenlinienförmigen Abschnitten (12) unverformte Zwischenstücke belassen werden, die glatte Drahtabschnitte (13) erzeugen,
daß in dem zur Herstellung des Vorprodukts (20) dienenden Spritzgußwerkzeug (31, 32) Querkammern über den zur Bandherstellung dienenden Kanalwindungen (33) angeordnet werden,
daß vor dem Spritzgießen in die Querkammern die glatten Drahtabschnitte (13) eingelegt werden, wobei diese Drahtabschnitte (13) in einem Höhenabstand (38) die in den Kanalwindungen (33) eingelegten wellenlinienförmigen Abschnitte (12) des Heizstrangs (15) überqueren,
daß die freien Enden der glatten Drahtabschnitte (13) jeweils zusammen mit dem zugehörigen Kontakt (40) in eine endseitige Kammererweiterung der Querkammer eingelegt werden,
und daß beim Spritzgießen Schweißmaterial (21) in den Querkanal und dessen Kammererweiterung einströmt und nach dem Verfestigen einen Quersteg (36) mit endseitigen Kontakt (40) erzeugt.

12. Verfahren nach Anspruch 11, dadurch gekennzeichnet, daß die Kammer einen Kammerquerschnitt aufweist, der den Leitungsquerschnitt der zur Rippenherstellung (24) dienenden Verteilungsleitungen übersteigt,
und daß nach dem Einführen und Verfestigen des Schweißmaterials (21) in den Querkammern auf der Innenfläche des Vorprodukts Querstege (36) erzeugt werden, die eine gegenüber den Verbindungsrippen (24) größere Steghöhe besitzen.

13. Verfahren nach einem oder mehreren der Ansprüche 2 bis 12, dadurch gekennzeichnet, daß - in Strömungsrichtung des Materials beim Spritzgießen des Vorprodukts (20) gesehen - im Spritzgußwerkzeug (31, 32) vor der zur Bandherstellung dienenden ersten Kanalwindung (33) eine Anfangskammer angeordnet wird, deren Kammerquerschnitt flacher als der Kanalquerschnitt für das Band (23) ist,
und daß nach dem Spritzgießen und Verfestigen des Schweißmaterials (21) in der Anfangskammer eine flache Randzone (71) am Vorprodukt (20) erzeugt wird, die vor der ersten Bandwindung (23') liegt.

14. Verfahren nach Anspruch 13, dadurch gekennzeichnet, daß in den Formteil (41) des zur Herstellung der Rohrarmatur dienenden zweiten Spritzgußwerkzeugs (41, 42) eine Düse (45) zum Einführen des Schweißmaterials (51) vorgesehen ist, die von einer Düsenbuchse (46) umschlossen wird,
und das Vorprodukt (20) mit seiner flachen Randzone (71) an die Düsenbuchse (46) angelegt wird, wobei die Innenfläche (28) des Vorprodukts (20) der Düsenöffnung zugekehrt ist,
und daß die Strömung des Schweißmaterials (51) zunächst auf die flache Randzone (71) des Vorprodukts (20) und dann erst auf die sich daran anschließenden Bandwindungen (23', 23) trifft,
wodurch beim Spritzgießen der Rohrarmatur (50) das Vorprodukt (20) mit seiner Außenfläche (27) gegen die Formfläche (47) des düsenseitigen Spritzguß-Formteils (41) gepreßt wird.

15. Verfahren nach Anspruch 14, dadurch gekennzeichnet, daß das Vorprodukt zwar in den der Düse (45) gegenüberliegenden Formteil (42) des Spritzgußwerkzeugs eingelegt wird, der zum Auswerfen der fertigen Rohrarmatur (50) dient,
aber beim Schließen der beiden Formteile (41, 42) des Spritzgußwerkzeugs das Vorprodukt (20) selbsttätig auf die Düsenbuchse (48) des düsenseitigen Formteils (41) aufgeschoben wird.

16. Verfahren nach einem oder mehreren der Ansprüche 1 bis 15, dadurch gekennzeichnet, daß der als Vorprodukt dienende Heizstrangträger (20) als ebene Matte ausgebildet wird und das den wellenlinienförmigen Heizstrang (15) aufnehmende Band (23) in Windungen (70) einer monofilaren oder bifilaren Spirale geführt wird.

17. Verfahren nach Anspruch 16, dadurch gekennzeichnet, daß die Matte (20) in dem zur Herstellung des Endprodukts (50) dienenden Spritzgußwerkzeug (41, 42) teilzylindrisch oder vollzylindrisch verformt wird.

18. Verfahren nach Anspruch 16 oder 17, dadurch gekennzeichnet, daß die Matte (20) als kreisförmige Scheibe ausgebildet wird.

19. Verfahren nach einem oder mehreren der Ansprüche 1 bis 15, dadurch gekennzeichnet, daß der als Vorprodukt dienende Heizstrangträger (20) zylindrisch ausgebildet wird,
und daß die den wellenlinienförmigen Heizstrang (15) aufnehmenden Bandwindungen (23) wenigstens bereichsweise in Windungen einer Helix geführt werden und einen zylindrischen Korb bilden,
und daß der zylindrische Korb (20') in der zur Herstellung des Endprodukts (60) dienenden Spritzgußform die Innenfläche (63) einer Rohrmuffe oder einer Rohrverbindungs- bzw. -Reparaturhülse (60) erzeugt,
wo die Wellenlinie (11) des Heizstrangs (15) mit ihrer einen Breitseite (17) frei liegt.

## Claims

1. Method for producing a pipe fitting (50), which consists at least in certain regions of a welding material (51) which can be thermowelded on, in an injection mould (31; 32; 41; 42), which fitting serves to mount or to connect or repair line pipes (56) also consisting of a thermoweldable material,
wherein channels (33) extending in turns (70) are disposed in a first injection mould (31, 32), into which channels (33) a first welding material (21) is introduced, and a primary product (20) is produced in the first injection mould (31, 32),
and an electrical heating wire (10) is laid in a plurality of turns (70) in the primary product (20),
and then, in a second injection mould (41, 42), which serves to produce the pipe fittings (50), the primary product (20) is disposed at the mould face (37, 47) which, when the pipe fitting (50) is finished, forms the contact face (64) for the line pipe (56),
and, finally, a second welding material (51) is introduced into the second injection mould (41, 42), where the pipe fitting (50) is obtained as the end product,
characterised in
that the heating wire (10) is initially brought into a plane wave line shape (11), at least in certain portions (12), thereby producing a heating strand (15) in the shape of a wave line,
that the wave line-shaped heating strand (15) is then laid in the first injection mould (31, 32) between the channel walls of the channel (33), which is initially still empty, and only then is the first welding material (21) introduced into the channels (33) and the heating strand (15) pressed with one broad side (17) of its wave line (11) against the mould face (37; 47) of the first injection mould (31, 32) which forms the outer face in the primary product (20) and subsequently, in the end product (50), the contact face (54) for the line pipe (56),
and that, after the first welding material (21) has solidified, the heating strand (15) is embedded in the primary product (20) and remains visible, as far as possible, with the outer broad side (17) of its wave line (11) both at the outer face (27) of the primary product (20) and subsequently, following the solidification of the second welding material (51) in the second injection mould (41, 42), at the contact face (56) of the end product (50).

2. Method according to claim 1, characterised in that the channel walls of the channel (33) of the first injection mould (31, 32) are undercut, and that the inserted heating strand (15) has a certain transverse elasticity and acts with opposite crest regions (16) of its wave line (11) on the undercut channel walls.

3. Method according to claim 1 or 2, characterised in that the welding material (21) is directed substantially against the inner broad side (18) of the wave line (11) of the wave line-shaped heating strand (15) when injection moulding the primary product (20),
and that the heating strand (15) is in the process pressed by the flow of welding material (21) with the outer broad side (17) of its wave line (11) against a mould face (37) of the first injection mould (31, 32).

4. Method according to one or more of claims 1 to 3, characterised in that there is a spacing (35) between adjacent channel turns (33) of the first injection mould (31, 32),
and that a wound band (23) of welding material (21) is produced following the introduction and solidification of the welding material (21) in the channel (33), wherein a free gap (25) remains between adjacent band turns (23) of the primary product (20).

5. Method according to claim 4, characterised in that the heating wire (10) in the heating strand (15) is shaped into a wave line (11), the wave line width (19) of which is substantially equal to the channel width (39), serving to produce the band (23), in the injection mould (31, 32),
and that, when injection moulding (21), the heating strand (15) is pressed with its outer broad side (17) of its wave line (11) onto the outer band side (27), extending over the entire band width (19), from one band edge to the opposite one.

6. Method according to claim 4 or 5, characterised in that - viewed in cross section - the channel (33) serving to produce the band (23) is divided into two sub-cross sections (30, 34),
i.e. on the one hand into an undercut holding cross section (30) for the wave line-shaped heating strand (15), which lies against the outer face (27) of the primary product (20) and acts on opposite crest regions (16) of the wave line shape of the heating strand,
and on the other into a flow cross section (34) for directing the flow of welding material (21), which is disposed at the inner face (28) of the primary product (20) and does not comprise a heating wire (10).

7. Method according to one or more of claims 2 to 4, characterised in that the radial spacings (35) between the channel turns (33) serving to produce the band are bridged by one or more distribution lines,
that at least some of the welding material (21) initially flows into the distribution lines, from where it then flows into the individual channel turns (33),
and that joints (24) of welding material are produced between adjacent band turns (23) following the solidification of the welding material (21) in the distributor lines.

8. Method according to claims 6 and 7, characterised in that the distribution lines have a line cross section which exceeds the flow cross section (34) of the channel (33) serving to produce the band,
and that continuous connecting ribs (24) are produced over the band turns (23) on the inner face (28) of the primary product (20) following the introduction and solidification of the welding material (21) in the distribution channels.

9. Method according to claim 8, characterised in that the distribution lines or the connecting ribs (24) produced therein extend in arcuate fashion.

10. Method according to one or more of claims 4 to 9, characterised in that the welding material (21) is introduced into the injection mould (31, 32) serving to produce the primary product through a sprue point (44), and that the distribution lines for the connecting ribs (24) start from the sprue point (44).

11. Method according to one or more of claims 4 to 10, characterised in that, when the heating strand (15) is produced, unshaped intermediate pieces, which produce smooth wire portions (13), are left between the wave line-shaped portions (12) shaped in a wave line shape (11),
that transverse chambers are disposed over the channel turns (33) serving to produce the band in the injection mould (31, 32) serving to produce the primary product (20),
that the smooth wire portions (13) are inserted in the transverse chambers before injection moulding takes place, wherein these wire portions (13) cross the wave line-shaped portions (12), inserted in the channel turns (33), of the heating strand (15) at a vertical spacing (38),
that the free ends of the smooth wire portions (13) are each inserted, together with the associated contact (40), in an end chamber widening of the transverse chamber,
and that, during injection moulding, welding material (21) flows into the transverse channel and the chamber widening thereof and produces a transverse web (36) with an end contact (40) following solidification.

12. Method according to claim 11, characterised in that the cross section of the chamber exceeds the line cross section of the distribution lines serving to produce the ribs (24),
and that transverse webs (36) of a web height exceeding that of the connecting ribs (24) are produced on the inner face of the primary product following the introduction and solidification of the welding material (21) in the transverse chambers.

13. Method according to one or more of claims 2 to 12, characterised in that - viewed in the direction of flow of the material when injection moulding the primary product (20) - an initial chamber is disposed in the injection mould (31, 32) before the first channel turn(33) serving to produce the band, the cross section of which chamber is flatter than the channel cross section for the band (23),
and that a flat edge zone (71), which lies before the first band turn (23'), is produced on the primary product (20) following injection moulding and solidification of the welding material (21) in the initial chamber.

14. Method according to claim 13, characterised in that a nozzle (45) for introducing the welding material (51) is provided in the mould part (41) of the second injection mould (41, 42) serving to produce the pipe fitting, which nozzle is surrounded by a nozzle bushing (46),
and the primary product (20) is applied with its flat edge zone (71) to the nozzle bushing (46), wherein the inner face (28) of the primary product (20) is turned towards the nozzle orifice,
and that the flow of welding material (51) initially strikes the flat edge zone (71) of the primary product (20) and only then the adjoining band turns (23', 23),
so that, when injection moulding the pipe fitting (50), the primary product (20) is pressed with its outer face (27) against the mould face (47) of the injection mould part (41) on the nozzle side.

15. Method according to claim 14, characterised in that, although the primary product is inserted in the mould part (42) of the injection mould lying opposite the nozzle (45) which serves to eject the finished pipe fitting (50),
the primary product (20) is automatically pushed onto the nozzle bushing (48) of the mould part (41) on the nozzle side when the two mould parts (41, 42) of the injection mould are closed.

16. Method according to one or more of claims 1 to 15, characterised in that the heating strand substrate (20) serving as primary product is formed as a plane mat, and the band (23) holding the wave line-shaped heating strand (15) is guided in turns (70) of a monofilar or bifilar spiral.

17. Method according to claim 16, characterised in that the mat (20) in the injection mould (41, 42) serving to produce the end product (50) is partially or fully cylindrical.

18. Method according to claim 16 or 17, characterised in that the mat (20) is formed as a circular disc.

19. Method according to one or more of claims 1 to 15, characterised in that the heating strand substrate (20) serving as primary product is cylindrical,
and that the band turns (23) holding the wave line-shaped heating strand (15) are guided in turns of a helix, at least in certain regions, and form a cylindrical basket,
and that the cylindrical basket (20') produces the inner face (63) of a pipe socket or a pipe connection or repair sleeve (60) in the injection mould serving to produce the end product (60),
where the wave line (11) of the heating strand (15) is exposed at one broad side (17).

## Revendications

1. Procédé de fabrication d'un corps ou élément de robinetterie pour tube (50) constitué au moins par zones d'un matériau soudable (51) pouvant être rapporté par soudure par voie thermique, dans un outil de moulage par injection (31; 32; 41; 42), élément de robinetterie servant au montage sur, et/ou à la liaison ou à la réparation de tuyauteries(56), également constituées d'un matériau soudable par voie thermique, dans lequel
dans un premier outil de moulage par injection (31, 32) sont disposés des canaux (33) s'étendant en spires (70), un premier matériau de soudage (21) étant introduit dans les canaux (33) et un préproduit (20) étant fabriqué dans le premier outil de moulage par injection (31, 32),
et un fil de chauffage électrique (10) étant posé en plusieurs enroulements (70) dans le préproduit (20),
et dans lequel ensuite, dans un deuxième outil de moulage par injection (41, 42) servant à la fabrication des corps de robinetterie pour tube (50), le préproduit (20) est disposé sur la surface de moule (37, 47) qui constitue la face de contact (64) de la tuyauterie (56) lorsque la fabrication du corps de robinetterie est achevée,
et dans lequel enfin, dans le deuxième outil de moulage par injection (41, 42) est introduit un deuxième matériau de soudage (51) et y est formé, à titre de produit final, le corps de robinetterie pour tube (50),
caractérisé en ce que
le fil de chauffage (10) est placé d'abord et au moins par tronçons (12) sous une forme de ligne ondulée (11) plane, de manière à constituer un cordon de chauffage (15) en forme de ligne ondulée,
en ce qu'ensuite le cordon de chauffage (15) en forme de ligne ondulée est posé dans le premier outil de moulage par injection (31, 32) entre les parois de canal du canal (33) initialement encore vide,
et, ensuite, le premier matériau de soudage (21) est introduit dans les canaux (33) et le cordon de chauffage (15) est pressé, par l'une (17) des faces larges de sa ligne d'ondulation (11) contre la surface de moulage (37; 47) du premier outil de moulage par injection (31, 32), qui pour le préproduit (20), constitue la surface extérieure, et ultérieurement pour le produit final (50), la surface de contact (54) du tube de canalisation (56),
et en ce que, après la solidification du premier matériau de soudage (21), le cordon de chauffage (15) est noyé dans le préproduit (20), et reste aussi visible que possible par la face large extérieure (17) de sa ligne d'ondulation (11) aussi bien sur la face extérieure (27) du préproduit (20) qu'également ultérieurement, après la solidification du deuxième matériau de soudage (51) dans le deuxième outil de moulage par injection (41, 42), sur la surface de contact (56) du produit final (50).

2. Procédé selon la revendication 1, caractérisé en ce que les parois de canal du canal (33) du premier outil de moulage par injection (31, 32) sont en contre-dépouille, et en ce que le cordon de chauffage (15) inséré présente une certaine élasticité transversale et, par les zones de crête (16) opposées de sa ligne d'ondulation (11), s'appuie sur les parois de canal en contre-dépouille.

3. Procédé selon la revendication 1 ou 2, caractérisé en ce que, lors du moulage par injection du préproduit (20), le matériau de soudage (21) est dirigé sensiblement contre la surface large intérieure (18) de la ligne d'ondulation (11) du cordon de chauffage (15) à forme ondulée,
et en ce qu'alors le cordon de chauffage (15) est pressé par l'écoulement du matériau de soudage (21), par la face large extérieure (17) de sa ligne d'ondulation (11), contre une surface de moule (37) appartenant au premier outil de moulage par injection (31, 32).

4. Procédé selon l'une ou plusieurs des revendications 1 à 3, caractérisé en ce que, entre des enroulements de canal (33) voisins du premier outil de moulage par injection (31, 32), est constitué un espacement (35),
et en ce que, après introduction et solidification du matériau de soudage (21) dans le canal (33), est créée une bande (23) enroulée en matériau de soudage (21), et en ce qu'un intervalle libre (25) subsiste entre des enroulements de bande (23) voisins du préproduit (20).

5. Procédé selon la revendication 4, caractérisé en ce que le fil de chauffage (10) est façonné dans le cordon de chauffage (15), pour produire une ligne d'ondulation (11) dont la largeur (19) des lignes d'ondulation est sensiblement identique à la largeur (39) de canal, servant à la fabrication de la bande (23), dans l'outil de moulage par injection (31, 32),
et en ce que, lors du moulage par injection (21), le cordon de chauffage (15) est pressé par sa face large extérieure (17) de sa ligne d'ondulation (11) sur la face extérieure (27) de bande et s'étend alors sur toute la largeur de bande (19), d'une arête de la bande à l'arête opposée.

6. Procédé selon la revendication 4 ou 5, caractérisé en ce que le canal (33) servant à la fabrication de la bande (23) est - en observant en coupe - constitué de deux sections transversales partielles (30, 34),
précisément, d'une part, en une section transversale de logement (30) en contre-dépouille, pour le cordon de chauffage (15) en forme de ligne ondulée, qui est situé sur la surface extérieure (27) du préproduit (20) et s'appuie chaque fois sur des zones de crête (16) opposées des lignes de forme ondulée du cordon de chauffage,
et, d'autre part, en une section transversale d'écoulement (34) pour guider l'écoulement du matériau de soudage (21), qui est disposé sur la surface intérieure (28) du préproduit (20) et ne contient aucun fil de chauffage (10).

7. Procédé selon l'une ou plusieurs des revendications 2 à 4, caractérisé en ce que les espacements radiaux (35), entre les enroulements de canaux (33) servant à la fabrication de la bande, sont pontés par une ou plusieurs conduites de distribution,
en ce qu'au moins une partie du matériau de soudage (21) s'écoule d'abord dans les conduites de distribution et, de là, ensuite dans les enroulements de canaux (33) individuels,
et en ce que, après la solidification du matériau de soudage (21) dans les conduites de distribution, entre des enroulements de bande (23) voisins, sont créées des liaisons (24) en matériau de soudage.

8. Procédé selon les revendications 6 et 7, caractérisé en ce que les conduites de distribution présentent une section transversale de conduite qui est supérieure à la section transversale d'écoulement (34) du canal (33) servant à la fabrication de la bande,
et en que, après introduction et solidification du matériau de soudage (21) dans les canaux de distribution, sur la surface intérieure (28) du préproduit (20) sont produites des nervures de liaison (24) continues, sur les enroulements de bande (23).

9. Procédé selon la revendication 8, caractérisé en ce que les conduites de distribution et/ou les nervures de liaison (24) créées dans ces conduites présentent une allure arquée.

10. Procédé selon l'une ou plusieurs des revendications 4 à 9, caractérisé en ce que le matériau de soudage (21) est introduit par un point de coulée (44) dans l'outil de moulage par injection (31, 32) servant à la fabrication du préproduit, et en ce que les conduites de distribution destinées aux nervures de liaison (24) partent du point de coulée (44).

11. Procédé selon l'une ou plusieurs des revendications 4 à 10, caractérisé en ce que, lors de la fabrication du cordon de chauffage (15) entre les tronçons (12) en forme de ligne ondulée moulée sous la forme de lignes ondulées (11), sont laissées en place des pièces intermédiaires non-conformées, générant des tronçons de fil lisses (13),
en ce que, dans l'outil de moulage par injection (31, 32) servant à la fabrication du préproduit (20), sont ménagées des chambres transversales sur les enroulements de canaux (33) servant à la fabrication de la bande,
en ce que, avant le moulage par injection, sont insérés dans les chambres transversales les tronçons de fil (13) lisses, ces tronçons de fil (13) traversant ou croisant avec un espacement en hauteur (38) les tronçons (12) en forme de ligne ondulée, insérés dans le enroulements de canaux (33) du cordon de chauffage (15),
en ce que les extrémités libres des tronçons de fil lisse (13) sont chaque fois insérées, conjointement avec le contact (40) afférent, dans un élargissement de chambre du côté d'extrémité de la chambre transversale,
et en ce que, lors du moulage par injection, du matériau de soudage (21) est introduit dans le canal transversal et dans son élargissement de chambre et en ce que, après la solidification, est générée une nervure transversale (36) avec un contact d'extrémité (40).

12. Procédé selon la revendication 11, caractérisé en ce que la chambre présente une section transversale de chambre qui est supérieure à la section transversale de canalisation des conduites de distribution servant à la fabrication des nervures (24),
et en ce que, après insertion et solidification du matériau de soudage (21) dans les chambres transversales, sur la surface intérieure du préproduit, sont générées des nervures transversales (36) ayant une hauteur de nervure supérieure à la hauteur des nervures de liaison (24).

13. Procédé selon l'une ou plusieurs des revendications 2 à 12, caractérisé en ce que - en observant dans la direction d'écoulement du matériau lors du moulage par injection du préproduit (20) - dans l'outil de moulage par injection (31, 32) avant le premier enroulement de canal (33) servant à la fabrication de la bande, est disposée une chambre de départ ou d'amorce, dont la section transversale de chambre est plus plate que la section transversale du canal destinée à la bande (23),
et en ce que, après le moulage par injection et la solidification du matériau de soudage (21), dans la chambre d'amorce est générée une zone de bordure (71) plate sur le préproduit (20), qui est située devant le premier enroulement de bande (23').

14. Procédé selon la revendication 13, caractérisé en ce que, dans la partie de moule (41) du deuxième outil de moulage par injection (41, 42) servant à la fabrication du corps ou de l'élément de robinetterie pour tube, est prévue une tuyère (45), destinée à l'introduction du matériau de soudage (51), entourée par une douille à tuyère (46),
en ce que le préproduit (20) est appliqué par sa zone de bordure (71) plate sur la douille à tuyère (46), la face intérieure (28) du préproduit (20) étant tournée vers l'ouverture de tuyère,
et en ce que l'écoulement du matériau de soudage (51) arrive d'abord sur la zone de bordure (71) plate du préproduit (20) puis ensuite sur les enroulements de bande (23', 23) s'y raccordant,
de sorte que, lors du moulage par injection du corps ou de l'élément de robinetterie pour tube (50), le préproduit (20) soit pressé par sa surface extérieure (27) contre la surface de moulage (47) de la partie de moule de coulée par injection (41) situé du côté de la tuyère.

15. Procédé selon la revendication 14, caractérisé en ce que le préproduit est, en fait, inséré dans la partie de moule (42) opposée à la tuyère (45) de l'outil de moulage par injection qui sert à l'éjection de l'élément ou corps de robinetterie pour tube (50) terminé,
mais que, lors de la fermeture des deux parties de moule (41, 42) de l'outil de moulage par injection, le préproduit (20) est automatiquement enfilé sur la douille à tuyère (48) de la partie de moule (41) située du côté de la tuyère.

16. Procédé selon l'une ou plusieurs des revendications 1 à 15, caractérisé en ce que le support de cordon de chauffage (20) servant de préproduit est réalisé sous la forme de natte plane, et que la bande (23), recevant le cordon de chauffage (15) en forme de ligne ondulée, est guidée en enroulements (70) d'une spirale monofilaire ou bifilaire.

17. Procédé selon la revendication 16, caractérisé en ce que la natte (20) est façonnée à une forme partiellement cylindrique ou complètement cylindrique dans l'outil de moulage par injection (41, 42) servant à la fabrication du produit final (50).

18. Procédé selon la revendication 16 ou 17, caractérisé en ce que la natte (20) est réalisée sous la forme d'un plateau en forme de disque.

19. Procédé selon l'une ou plusieurs des revendications 1 à 15, caractérisé en ce que le support de cordon de chauffage (20) servant de préproduit présente une configuration cylindrique,
et en ce que les enroulements de bande (23) recevant le cordon de chauffage (15) en forme de lignes ondulées sont guidés, au moins par zones, en des enroulements d'une hélice et constituent un panier ou une corbeille cylindrique,
et en ce que le panier cylindrique (20') dans le moule de coulée par injection servant à la fabrication du produit final (60) produit la surface intérieure (63) d'un manchon tubulaire ou d'une douille de liaison et/ou de réparation de tube (60),
à l'endroit où la ligne ondulée (11) du cordon de chauffage (15) est exposée librement par l'une (17) de ses faces larges.
